# FASCICULE DE BREVET EUROPEEN

(11) **EP 3 545 712 B1**
(45) Date de publication et mention de la délivrance du brevet: **16.09.2020**
(21) Numéro de dépôt: 17804535.7
(22) Date de dépôt: 23.11.2017
(51) Int. Cl.: H04W 48/20, H04W 72/02, H04W 76/16

(54) **PROCÉDÉ DE SÉLECTION, PAR UN DISPOSITIF ÉMETTEUR, D'UN MODE DE COMMUNICATION POUR ÉCHANGER DES DONNÉES AVEC UN DISPOSITIF RÉCEPTEUR**
VERFAHREN ZUR AUSWAHL EINES KOMMUNIKATIONSMODUS ZUM AUSTAUSCH VON DATEN MIT EINEM EMPFÄNGERGERÄT DURCH EINEN SENDERGERÄT
METHOD FOR SELECTING, BY A TRANSMITTER DEVICE, A COMMUNICATION MODE FOR EXCHANGING DATA WITH A RECEIVER DEVICE

(30) Priorité: 23.11.2016 FR 1661392
(43) Date de publication de la demande: 02.10.2019
(73) Titulaire: Sigfox, 31670 Labege (FR)
(72) Inventeur: PONSARD, Benoit, 31000 Toulouse (FR); ZUNIGA, Juan Carlos, Montreal, Québec H4L 3J4 (CA)
(74) Mandataire: Ipside
(86) Numéro de dépôt international: PCT/EP2017/080239
(87) Numéro de publication internationale: WO 2018/096045

(56) Documents cités:
- US-B1- 9 232 499
- MITOLA JOSEPH ET AL: "Accelerating 5G QoE via public-private spectrum sharing", IEEE COMMUNICATIONS MAGAZINE, IEEE SERVICE CENTER, PISCATAWAY, US, vol. 52, no. 5, 1 mai 2014 (2014-05-01), pages 77-85, XP011548485, ISSN: 0163-6804, DOI: 10.1109/MCOM.2014.6815896 [extrait le 2014-05-14]

## Description

### DOMAINE TECHNIQUE

La présente invention appartient au domaine des systèmes de communication sans fil. Plus particulièrement, la présente invention concerne la sélection, par un terminal, d'un mode de communication pour échanger des données avec des stations de base d'un système de communication sans Un exemple se trouve dans US 9 322 499.

### ÉTAT DE LA TECHNIQUE

Dans certains systèmes de communication sans fil, les terminaux peuvent avoir à supporter plusieurs modes de communication différents pour échanger des données avec des stations de base. De tels modes de communication sont par exemple à utiliser dans des zones géographiques respectives différentes, pour tenir compte notamment des contraintes règlementaires en vigueur dans chacune de ces zones géographiques.

Par exemple, la bande de fréquences à utiliser pour émettre des signaux, sur un lien montant depuis le terminal vers les stations de base et/ou sur un lien descendant depuis lesdites stations de base vers le terminal, la puissance maximale d'émission des signaux, etc., peuvent varier d'une zone géographique à une autre, à cause de contraintes règlementaires locales.

Dans les systèmes de communication sans fil actuels, par exemple GSM, UMTS, LTE, etc., les stations de base émettent de manière récurrente un signal de diffusion, également connu sous le nom de voie balise (« beacon » dans la littérature anglo-saxonne), qui est utilisé par les terminaux pour sélectionner le mode de communication à utiliser.

Par exemple, la bande de fréquences dans laquelle le signal de diffusion est émis peut varier d'une zone géographique à une autre. Dans un tel cas, le terminal écoute successivement les différentes bandes de fréquences possibles, à la recherche d'un signal de diffusion. Lorsqu'un signal de diffusion est détecté, le terminal peut déduire, de la bande de fréquences dudit signal de diffusion, le mode de communication à utiliser dans la zone géographique où il se trouve.

Dans les applications du type « Internet des objets » (« Internet of Things » ou IoT dans la littérature anglo-saxonne), chaque objet de la vie de tous les jours a vocation à devenir un objet communicant, et est à cet effet équipé d'un terminal d'un système de communication sans fil. On comprend cependant que, dans la mesure du possible, le coût du terminal ne doit pas impacter de façon significative celui de l'objet auquel il est ajouté, afin de pouvoir rendre communicants beaucoup d'objets de la vie de tous les jours. La consommation électrique desdits terminaux doit également être réduite au maximum, afin de ne pas impacter l'autonomie des objets opérés sur batterie.

En outre, pour réduire les coûts de mise en œuvre d'un système de communication sans fil pour l'IoT, il est également avantageux d'utiliser une bande de fréquences libre de droits. Par exemple, la bande ISM (« Industrial, Scientific and Médical ») comporte des bandes de fréquences dites libres en ce qu'elles peuvent être utilisées sans autorisation administrative préalable, sous réserve de respecter certaines contraintes réglementaires.

Or l'émission de signaux de diffusion dans de telles bandes de fréquences peut s'avérer complexe du fait des contraintes réglementaires à respecter. Notamment, les limitations en termes de taux d'occupation temporelle excluent d'émettre un signal de diffusion de manière continue. En outre, pour pouvoir augmenter la puissance d'émission du signal de diffusion, afin d'augmenter la portée de la station de base qui l'émet, il faut diminuer le taux d'occupation temporelle de la bande de fréquences. Il en résulte que le temps de silence entre deux signaux de diffusion consécutifs peut être long, de même que le temps d'écoute nécessaire pour recevoir un signal de diffusion du système de communication sans fil.

Dans un tel contexte, l'écoute successive de différentes bandes de fréquences, à la recherche d'un signal de diffusion émis par une station de base du système de communication sans fil, peut donc prendre beaucoup de temps et, surtout, est susceptible d'entraîner une consommation électrique trop importante pour un objet communicant opéré sur batterie.

### EXPOSÉ DE L'INVENTION

La présente invention a pour objectif de remédier à tout ou partie des limitations des solutions de l'art antérieur, notamment celles exposées ci-avant, en proposant une solution qui permette à un dispositif émetteur d'un système de communication sans fil, tel qu'un terminal équipant un objet communicant, de sélectionner un mode de communication même lorsqu'aucun signal de diffusion n'est émis dans ledit système de communication sans fil.

A cet effet, et selon un premier aspect, l'invention concerne un procédé de sélection, par un dispositif émetteur d'un premier système de communication sans fil, d'un mode de communication à utiliser pour échanger des données avec un dispositif récepteur dudit premier système de communication sans fil, ledit mode de communication étant sélectionné parmi au moins deux modes de communication différents associés à des zones géographiques respectives différentes. Ledit procédé de sélection comporte :
- une écoute, par le dispositif émetteur, d'un second système de communication sans fil différent du premier système de communication sans fil et comportant au moins deux modes de communication différents associés à des zones géographiques différentes,
- une détermination, par le dispositif émetteur, du mode de communication utilisé par ledit second système de communication sans fil,
- une sélection du mode de communication à utiliser pour échanger des données avec le dispositif récepteur du premier système de communication sans fil en fonction du mode de communication utilisé par ledit second système de communication sans fil.

Ainsi, le procédé de sélection comporte l'écoute, par le dispositif émetteur, d'un second système de communication sans fil différent du premier système de communication sans fil, mais qui comporte également plusieurs modes de communication différents associés respectivement à différentes zones géographiques. Par « second système de communication sans fil différent du premier système de communication sans fil », on entend en particulier que les modes de communication du second système de communication sans fil sont tous différents des modes de communication du premier système de communication sans fil.

En outre, le second système de communication peut être complètement indépendant du premier système de communication sans fil, et ne nécessite pas d'être modifié pour les besoins de l'invention qui repose sur une simple écoute dudit second système de communication sans fil par le dispositif émetteur. Ainsi, le dispositif émetteur peut sélectionner un mode de communication même lorsqu'aucun signal de diffusion n'est émis dans le premier système de communication sans fil, en écoutant par exemple un signal de diffusion émis dans le second système de communication sans fil.

Le dispositif émetteur détermine ensuite le mode de communication utilisé par le second système de communication sans fil, qui dépend de la zone géographique dans laquelle se trouve ledit dispositif émetteur, et en déduit le mode de communication à utiliser pour échanger des données dans le premier système de communication sans fil.

De préférence, le second système de communication sans fil est un système de diffusion unidirectionnel. Les systèmes de diffusion existants présentent l'avantage que les signaux de diffusion émis peuvent généralement être décodés avec des modules de réception simples et peu coûteux à fabriquer. De plus, lesdits signaux de diffusion sont généralement émis très fréquemment, voire de manière continue, de sorte que le temps d'écoute nécessaire pour recevoir un tel signal de diffusion peut être extrêmement réduit. En outre, les systèmes de diffusion existants desservent généralement des zones géographiques de grandes dimensions qui correspondent sensiblement aux zones géographiques définies pour les bandes de fréquences libres de droits, comme par exemple la bande ISM.

Dans des modes particuliers de mise en œuvre, le procédé de sélection peut comporter en outre l'une ou plusieurs des caractéristiques suivantes, prises isolément ou selon toutes les combinaisons techniquement possibles.

Dans des modes particuliers de mise en œuvre, le second système de communication sans fil est un système de diffusion de signal horaire de synchronisation d'horloge radio-pilotée.

Dans des modes particuliers de mise en œuvre, le second système de communication sans fil est un système de diffusion de télévision analogique ou numérique.

Dans des modes particuliers de mise en œuvre, le second système de communication sans fil est un système de diffusion audio en modulation de fréquence.

Dans des modes particuliers de mise en œuvre, le second système de communication sans fil est un système de diffusion de balise maritime ou aéronautique.

Dans des modes particuliers de mise en œuvre, les modes de communication du premier système de communication sans fil diffèrent par l'un au moins des paramètres suivants :
- bande de fréquences de signaux émis par le dispositif émetteur,
- bande de fréquences de signaux reçus par le dispositif émetteur,
- puissance de signaux émis par le dispositif émetteur,
- type de codage et/ou de modulation de signaux émis par le dispositif émetteur,
- débit de données de signaux émis par le dispositif émetteur,
- méthode d'accès à un canal sur lequel les données sont échangées entre le dispositif émetteur et le dispositif récepteur.

Selon un second aspect, la présente invention concerne un dispositif émetteur d'un premier système de communication sans fil, comportant un module de communication adapté à échanger des données avec un dispositif récepteur dudit premier système de communication sans fil selon au moins deux modes de communication différents associés à des zones géographiques respectives différentes. Le dispositif émetteur comporte en outre :
- un module d'écoute configuré pour écouter un second système de communication sans fil différent du premier système de communication sans fil et comportant au moins deux modes de communication différents associés à des zones géographiques différentes, et pour déterminer le mode de communication utilisé par ledit second système de communication sans fil,
- un module de contrôle configuré pour sélectionner un mode de communication du module de communication en fonction du mode de communication utilisé par le second système de communication sans fil.

Dans des modes particuliers de réalisation, le dispositif émetteur peut comporter en outre l'une ou plusieurs des caractéristiques suivantes, prises isolément ou selon toutes les combinaisons techniquement possibles.

Dans des modes particuliers de réalisation, le module d'écoute est configuré pour écouter un système de diffusion de signal horaire de synchronisation d'horloge radio-pilotée.

Dans des modes particuliers de réalisation, le module d'écoute est configuré pour écouter un système de diffusion de télévision analogique ou numérique.

Dans des modes particuliers de réalisation, le module d'écoute est configuré pour écouter un système de diffusion en modulation de fréquence.

Dans des modes particuliers de réalisation, le module d'écoute est configuré pour écouter un système de diffusion de balise maritime ou aéronautique.

Dans des modes particuliers de réalisation, le module de communication est configuré pour émettre des signaux à bande ultra-étroite.

### PRÉSENTATION DES FIGURES

L'invention sera mieux comprise à la lecture de la description suivante, donnée à titre d'exemple nullement limitatif, et faite en se référant aux figures qui représentent :
- Figure 1 : une représentation schématique d'un premier système de communications sans fil et d'un second système de communication sans fil,
- Figure 2 : une représentation schématique d'un exemple de réalisation d'un terminal,
- Figure 3 : un diagramme illustrant les principales étapes d'un procédé de sélection d'un mode de communication.

Dans ces figures, des références identiques d'une figure à une autre désignent des éléments identiques ou analogues. Pour des raisons de clarté, les éléments représentés ne sont pas à l'échelle, sauf mention contraire.

### DESCRIPTION DÉTAILLÉE DE MODES DE RÉALISATION

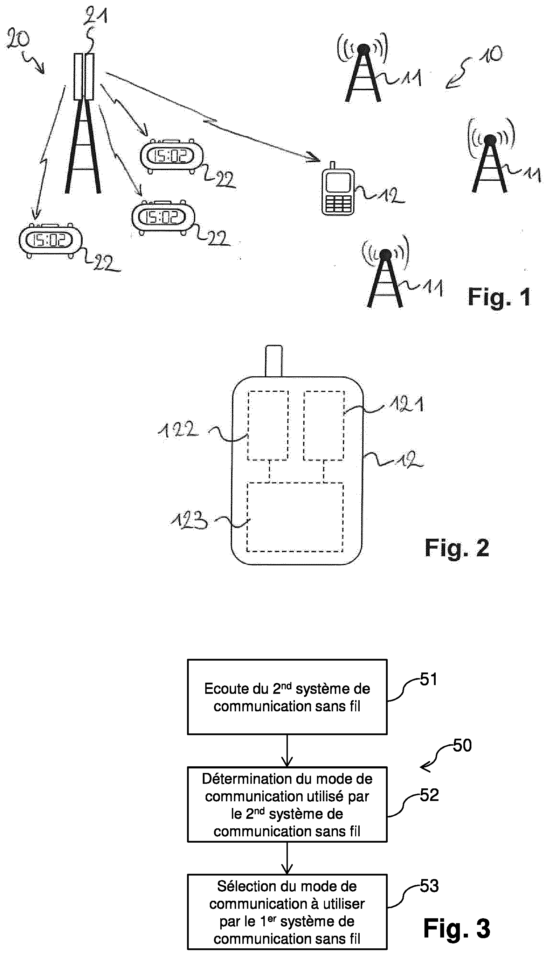

La figure 1 représente schématiquement un premier système 10 de communication sans fil, comportant un terminal 12 et une pluralité de stations de base 11 réparties sur une zone géographique.

Le terminal 12 et les stations de base 11 échangent des données sous la forme de signaux radioélectriques. Par « signal radioélectrique », on entend une onde électromagnétique se propageant en espace libre, dont les fréquences sont comprises dans le spectre traditionnel des ondes radioélectriques (quelques hertz à plusieurs centaines de gigahertz).

Les échanges de données entre le terminal 12 et les stations de base 11 sont par exemple bidirectionnels. En d'autres termes, le terminal 12 est adapté à émettre des données sur un lien montant à destination des stations de base 11, et à recevoir des données sur un lien descendant depuis lesdites stations de base 11 vers ledit terminal 12.

Rien n'exclut cependant, suivant d'autres exemples, d'avoir des échanges unidirectionnels, uniquement sur le lien montant ou uniquement sur le lien descendant. En particulier, de nombreuses applications du type loT consistent en de la collecte de données émises par des terminaux 12, et s'accommodent parfaitement d'échanges unidirectionnels, uniquement sur le lien montant entre chaque terminal 12 et les stations de base 11.

Dans la suite de la description, on se place de manière non limitative dans le cas où le premier système 10 de communication sans fil est à bande ultra étroite. Par « bande ultra étroite » (« Ultra Narrow Band » ou UNB dans la littérature anglo-saxonne), on entend que le spectre fréquentiel instantané des signaux émis par les terminaux 12 est de largeur fréquentielle inférieure à deux kilohertz, voire inférieure à un kilohertz. De telles dispositions sont particulièrement avantageuses en ce que l'émission de tels signaux peut être réalisée avec une consommation électrique très réduite, particulièrement adaptée pour des applications du type loT.

La figure 2 représente schématiquement un exemple de réalisation d'un terminal 12.

Tel qu'illustré par la figure 2, le terminal 12 comporte un module 121 de communication adapté à échanger des données avec les stations de base 11 du premier système 10 de communication sans fil.

Plus particulièrement, le module 121 de communication supporte au moins deux modes de communication différents. Ces deux modes de communication différents supportés par le module 121 de communication diffèrent, par exemple, par l'un au moins des paramètres suivants :
- bande de fréquences de signaux émis par le terminal 12,
- bande de fréquences de signaux reçus par le terminal 12,
- puissance de signaux émis par le terminal 12,
- type de codage et/ou de modulation de signaux émis par le terminal 12,
- débit de données de signaux émis par le terminal 12,
- méthode d'accès au lien montant ou au lien descendant, etc.

Les différents modes de communication supportés par le module 121 de communication sont à utiliser dans des zones géographiques respectives différentes, et visent par exemple à respecter des contraintes réglementaires locales. Par exemple, les différentes zones géographiques correspondent à :
- la zone géographique regroupant les pays d'Europe, d'Afrique et du Moyen-Orient (« Europe Middle East and Africa » ou EMEA),
- les Etats-Unis (« United States of America » ou USA),
- le Japon,
- la République Populaire de Chine (« People's Republic of China » ou PRC), etc.

Ainsi, lorsque le terminal 12 se trouve dans une première zone géographique (par exemple EMEA), le module 121 de communication dudit terminal 12 utilise un premier mode de communication pour échanger des données avec les stations de base 11 réparties dans cette première zone géographique. Lorsque le terminal 12 se trouve dans une seconde zone géographique (par exemple USA), le module 121 de communication utilise un second mode de communication pour échanger des données avec les stations de base 11 réparties dans cette seconde zone géographique, etc. Le tableau 1 ci-dessous donne un exemple de zones géographiques différentes et de modes de communication MC1-1 à MC4-1 associés pour le premier système 10 de communication sans fil.

**Tableau 1 : Exemples de zones géographiques**

| Zone géographique | Mode de communication |
|---|---|
| EMEA | MC1-1 |
| USA | MC2-1 |
| PRC | MC3-1 |
| Japon | MC4-1 |

On comprend que terminal 12 doit pouvoir adapter le mode de communication utilisé par le module 121 de communication pour échanger des données avec les stations de base 11 de la zone géographique dans laquelle il se trouve, en particulier si le terminal 12 peut être déplacé d'une zone géographique à une autre et/ou lors de la première mise en fonctionnement dudit terminal 12 dans une zone géographique non connue a priori, etc.

Tel qu'illustré par la figure 2, le terminal 12 comporte à cet effet :
- un module 122 d'écoute configuré pour écouter un second système 20 de communication sans fil comportant également au moins deux modes de communication différents associés à des zones géographiques différentes, et pour déterminer le mode de communication utilisé par ledit second système 20 de communication sans fil,
- un module 123 de contrôle configuré pour sélectionner un mode de communication du module 121 de communication en fonction du mode de communication utilisé par le second système 20 de communication sans fil.

Le module 122 d'écoute et le module 123 de contrôle comportent par exemple un ou plusieurs processeurs et des moyens de mémorisation (disque dur magnétique, mémoire électronique, disque optique, etc.) dans lesquels est mémorisé un produit programme d'ordinateur, sous la forme d'un ensemble d'instructions de code de programme à exécuter. Alternativement ou en complément, le module 122 d'écoute et/ou le module 123 de contrôle comportent un ou des circuits logiques programmables (FPGA, PLD, etc.), et/ou un ou des circuits intégrés spécialisés (ASIC, etc.), et/ou un ensemble de composants électroniques discrets, etc.

Le module 122 d'écoute comporte en outre des moyens permettant d'écouter le second système 20 de communication sans fil, qui se présentent de manière conventionnelle sous la forme d'un circuit radioélectrique comportant des équipements (antenne, amplificateur, oscillateur local, mélangeur, filtre analogique, etc.) connus de l'homme de l'art.

En d'autres termes, le module 122 d'écoute et le module 123 de contrôle comportent un ensemble de moyens configurés de façon logicielle (produit programme d'ordinateur spécifique) et/ou matérielle (FPGA, PLD, ASIC, composants électroniques discrets, circuit radioélectrique, etc.) pour mettre en œuvre les étapes d'un procédé 50 de sélection décrit ci-après.

La figure 3 représente schématiquement les principales étapes d'un procédé 50 de sélection de mode de communication mis en œuvre par le terminal 12, lesquelles sont :
- 51 écoute, par le module 122 d'écoute, du second système 20 de communication sans fil,
- 52 détermination, par le module 122 d'écoute, du mode de communication utilisé par ledit second système 20 de communication sans fil,
- 53 sélection, par le module 123 de contrôle, du mode de communication à utiliser pour échanger des données avec les stations de base 11 du premier système 10 de communication sans fil en fonction du mode de communication utilisé par ledit second système 20 de communication sans fil.

Ainsi, au cours de l'étape 51, le module 122 d'écoute écoute le second système 20 de communication sans fil, qui est différent du premier système 10 de communication sans fil.

Comme le premier système 10 de communication sans fil, le second système 20 de communication sans fil comporte plusieurs modes de communication associés respectivement à différentes zones géographiques.

De préférence, le second système 20 de communication sans fil est tel que le découpage des différentes zones géographiques desservies est identique à celui des différentes zones géographiques desservies par le premier système 10 de communication sans fil, afin d'avoir une correspondance biunivoque entre les modes de communication du second système 20 de communication sans fil et les modes de communication du premier système 10 de communication sans fil.

Toutefois, une telle correspondance biunivoque n'est pas toujours possible, dans la mesure où le second système 20 de communication sans fil est de préférence un système de communication sans fil existant, indépendant du premier système 10 de communication sans fil. Il est possible, dans certains cas, d'avoir un découpage en zones géographiques du second système 20 de communication sans fil qui ne permette pas toujours de lever l'ambiguïté sur le mode de communication à utiliser dans le premier système 10 de communication sans fil. Ce sera par exemple le cas si l'une des zones géographiques du second système 20 de communication se trouve à cheval sur deux zones géographiques adjacentes du premier système 10 de communication sans fil. Dans un tel cas, il est possible d'utiliser des moyens complémentaires pour lever complètement l'ambiguïté sur le mode de communication à utiliser dans le premier système 10 de communication sans fil. Notamment, il est possible d'écouter au moins un troisième système de communication sans fil comportant également plusieurs modes de communication associés à des zones géographiques respectives différentes.

Dans la suite de la description, on se place de manière non limitative dans le cas où le second système 20 de communication sans fil est un système de diffusion de signal horaire de synchronisation d'horloge radio-pilotée (« Radio-Controlled Clock » ou RCC dans la littérature anglo-saxonne).

Il est cependant à noter que d'autres exemples sont possibles pour le second système 20 de communication sans fil. Suivant d'autres exemples non limitatifs, le second système 20 de communication sans fil peut être l'un quelconque des systèmes de communication sans fil suivants, qui utilisent des modes de communication différents associés à des zones géographiques respectives différentes :
- un système de diffusion de télévision analogique, pour lequel les différents modes de communication correspondent par exemple aux différentes normes SECAM (« Séquentiel Couleur à Mémoire » en France, en Fédération de Russie, etc.), PAL (« Phase Alternating Line » au Brésil, en PRC, etc.), NTSC (« National Television System Committee » aux USA, au Canada, etc.), etc.,
- un système de diffusion de télévision numérique, pour lequel les différents modes de communication correspondent par exemple aux différentes normes DVB-T (« Digital Video Broadcasting-Terrestrial » en Europe, en Fédération de Russie, etc.), ATSC (« Advanced Television Systems Committee », aux USA, au Canada, etc.), ISDB (« Integrated Services Digital Broadcasting » au Japon, en LATAM, etc.), DTMB (« Digital Television Multimedia Broadcast » en PRC, etc.), etc.,
- un système de diffusion audio en modulation de fréquence, dit « radio FM », dans la gamme des très hautes fréquences (« Very High Frequency » ou VHF dans la littérature anglo-saxonne), pour lequel les modes de communication diffèrent notamment, d'une zone géographique à une autre, par la bande de fréquences utilisée,
- un système de diffusion de balise maritime ou aéronautique (par exemple les balises « VHF Omnidirectional Range » ou VOR, les balises « Non Directional Beacon » ou NDB, etc.), etc.

Tel qu'indiqué ci-dessus, il est également possible, dans des modes particuliers de mise en œuvre, d'écouter plusieurs systèmes de communication sans fil, différents du premier système 10 de communication sans fil, afin notamment de déterminer sans ambiguïté le mode de communication à utiliser pour le premier système 10 de communication sans fil dans la zone géographique dans laquelle se trouve le terminal 12.

Tel qu'illustré par la figure 1, un système 20 de diffusion de signal horaire comporte, dans une zone géographique donnée, une station de diffusion 21 qui émet un signal horaire à destination d'horloges 22 radio-pilotées, à partir duquel lesdites horloges 22 radio-pilotées peuvent se synchroniser sur une référence temporelle de la station de diffusion 21.

De manière plus générale, le système 20 de diffusion de signal horaire comporte plusieurs stations de diffusion 21, réparties dans des zones géographiques respectives différentes, qui utilisent des modes de communication respectifs différents. Le tableau 2 ci-dessous donne des exemples de stations de diffusion 21 de signal horaire, ainsi que les zones géographiques et modes de communication MC1-2 à MC6-2 associés.

**Tableau 2 : Exemples de stations de diffusion de signal horaire**

| Nom de la station de diffusion | Zone géographique | Mode de communication | Fréquence(s) porteuse(s) du mode de communication |
|---|---|---|---|
| WWVB | USA | MC1-2 | 60 kHz |
| BPC | PRC | MC2-2 | 68.5 kHz |
| DCF77 | Allemagne | MC3-2 | 77.5 kHz |
| HBG | Suisse | MC4-2 | 75 kHz |
| JJY | Japon | MC5-2 | 40 kHz, 60 kHz |
| MSF | Royaume-Uni | MC6-2 | 60 kHz |

Au cours de l'étape 52, le module 122 d'écoute détermine le mode de communication utilisé par le second système 20 de communication sans fil.

De manière générale, deux modes de communication du second système 20 de communication sans fil peuvent différer par un ou plusieurs paramètres. Par exemple, deux modes de communication différents du second système 20 de communication sans fil peuvent différer par l'un au moins des paramètres suivants :
- bandes de fréquences des signaux échangés dans le second système 20 de communication sans fil,
- type de codage et/ou de modulation utilisé pour les signaux échangés dans le second système 20 de communication sans fil,
- allure temporelle et/ou fréquentielle des signaux échangés dans le second système 20 de communication sans fil,
- format des données incluses dans les signaux échangés dans le second système 20 de communication sans fil, etc.

Les valeurs des différents paramètres associées à chaque mode de communication du second système 20 de communication sans fil sont par exemple mémorisées dans une mémoire non volatile du terminal 12, afin de permettre au module 122 d'écoute de distinguer lesdits modes de communication entre eux en déterminant les valeurs de ces paramètres pour des signaux reçus provenant du second système 20 de communication sans fil.

Déterminer le mode de communication utilisé dans le second système 20 de communication sans fil peut, dans certains cas, ne nécessiter que de mesurer certains paramètres physiques des signaux (bande de fréquences utilisée, allure temporelle et/ou fréquentielle), mais peut également nécessiter d'aller jusqu'à extraire les données incluses dans les signaux échangés dans le second système 20 de communication sans fil.

Dans l'exemple décrit ci-avant en référence au tableau 2, dans le cas d'un système 20 de diffusion de signal horaire, la détermination du mode de communication utilisé peut commencer par déterminer la fréquence porteuse du signal horaire émis par la station de diffusion la plus proche de la zone géographique dans laquelle se trouve le terminal 12.

Par exemple, si le module 122 d'écoute reçoit un signal horaire sur la fréquence porteuse 68.5 kHz, alors le mode de communication utilisé correspond au mode de communication MC2-2 utilisé par la station de diffusion BPC se trouvant en PRC. Si le module 122 d'écoute reçoit un signal horaire sur la fréquence porteuse 77.5 kHz, alors le mode de communication utilisé correspond au mode de communication MC3-2 utilisé par la station de diffusion DCF77 se trouvant en Allemagne.

Par contre, si le module 122 d'écoute reçoit un signal horaire sur la fréquence porteuse 60 kHz, alors le mode de communication utilisé correspond à l'un des modes de communication MC1-2 (WWVB aux USA), MC5-2 (JJY au Japon) et MC6-2 (MSF au Royaume-Uni). Par conséquent, dans un tel cas, la détermination de la fréquence porteuse ne suffit pas à déterminer le mode de communication de manière non ambigüe. Pour lever l'ambiguïté sur le mode de communication utilisé, il est par exemple possible d'analyser d'autres paramètres du signal horaire, jusqu'à ce que le mode de communication utilisé soit déterminé de manière non-ambigüe ou avec une forte probabilité.

Il est à noter que, dans certains cas, il est possible de recevoir des signaux horaires de plusieurs stations de diffusion 21 utilisant des modes de communication différents, dans la mesure où de telles stations de diffusion 21 de signaux horaires ont des portées très importantes. La réception de signaux horaires de stations de diffusion 21 différentes peut, dans certains cas, permettre de lever certaines ambiguïtés. Par exemple, dans le cas décrit ci-avant d'un signal horaire reçu sur la fréquence porteuse 60 kHz, le terminal 12 peut se trouver dans ou à proximité des zones géographiques suivantes : USA, Japon ou Royaume-Uni. Par contre, si le module 122 d'écoute reçoit également un signal horaire sur la fréquence porteuse 77.5 kHz, alors cela signifie que le terminal 12 se trouve dans la zone géographique EMEA, quelque part entre le Royaume-Uni et l'Allemagne, et les modes de communication déterminés correspondent aux modes de communication MC6-2 et MC3-2.

En cas d'ambiguïté sur le mode de communication utilisé, par exemple si la fréquence porteuse 60 kHz du signal horaire reçu ne permet de déterminer avec certitude le mode de communication utilisé parmi les modes de communication MC1-2 (WWVB aux USA), MC5-2 (JJY au Japon) et MC6-2 (MSF au Royaume-Uni), alors il est possible d'analyser d'autres paramètres du signal horaire. Par exemple, il est possible d'analyser le type de modulation utilisé dans le signal horaire, l'allure temporelle et/ou fréquentielle du signal horaire, le format des données incluses dans le signal horaire, etc.

Au cours de l'étape 53, le module 123 de contrôle sélectionne le mode de communication à utiliser dans le cadre du premier système 10 de communication sans fil, en fonction du mode de communication utilisé par le second système 20 de communication sans fil.

En effet, le mode de communication utilisé par le second système 20 de communication sans fil dépend de la zone géographique dans se trouve le terminal 12, et peut donc être utilisé par le terminal 12 pour en déduire la zone géographique dans laquelle il se trouve et, par conséquent, le mode de communication utilisé par le premier système 10 de communication sans fil.

Par exemple, le terminal 12 peut mémoriser dans un mémoire non volatile des tables correspondant aux tableaux 1 et 2 ci-dessus. Dans un tel cas, le module 123 de contrôle détermine, à partir du mode de communication utilisé par le second système 20 de communication sans fil, la zone géographique dans laquelle se trouve le terminal 12 selon le découpage du second système 20 de communication sans fil. Ensuite, le module 123 de contrôle en déduit la zone géographique dans laquelle se trouve le terminal 12 selon le découpage du premier système 10 de communication sans fil, et sélectionne le mode de communication associé à cette zone géographique.

Le second système 20 de communication sans fil est de préférence un système desservant des zones géographiques de grandes dimensions, de sorte qu'une couverture globale est obtenue par un nombre limité de zones géographiques. Ainsi, la quantité d'informations à mémoriser dans le terminal 12, qui correspond par exemple aux tableaux 1 et 2 ci-dessus dans le cas d'un système de diffusion de signal horaire de synchronisation d'horloge radio-pilotée, est extrêmement réduite et peut aisément être mémorisée dans une mémoire non volatile sans impacter le coût du terminal 12.

Suivant un autre exemple, le terminal 12 peut mémoriser dans une mémoire non volatile une table associant, à chaque mode de communication du second système 20 de communication sans fil, le mode de communication à utiliser dans le premier système 10 de communication sans fil. Le tableau 3 ci-dessous donne un exemple non limitatif d'une telle table dans le cas des modes de communication décrits en référence aux tableaux 1 et 2.

**Tableau 3 : Correspondances entre modes de communication**

| Mode de communication du second système de communication sans fil | Mode de communication du premier système de communication sans fil |
|---|---|
| MC1-2 | MC2-1 |
| MC2-2 | MC3-1 |
| MC3-2 | MC1-1 |
| MC4-2 | MC1-1 |
| MC5-2 | MC4-1 |
| MC6-2 | MC1-1 |

Ainsi, si le second système 20 de communication sans fil utilise le mode de communication MC1-2 (USA), alors le module 123 de contrôle sélectionne le mode de communication MC2-1 (USA). Si le second système 20 de communication sans fil utilise l'un des modes de communication MC3-2 (Allemagne), MC4-2 (Suisse) et MC6-2 (Royaume-Uni), alors le module 123 de contrôle sélectionne le mode de communication MC1-1 (EMEA), etc.

De manière plus générale, il est à noter que les modes de mise en œ uvre et de réalisation considérés ci-dessus ont été décrits à titre d'exemples non limitatifs, et que d'autres variantes sont par conséquent envisageables.

Notamment, l'invention a été décrite en considérant uniquement des modes de communication utilisés par un terminal 12 pour émettre des signaux sur un lien montant, depuis le terminal 12 vers les stations de base 11. L'invention peut également être utilisée, alternativement ou en complément, sur un lien descendant depuis une station de base 11 vers des terminaux 12. En d'autres termes, l'invention est applicable de manière plus générale à la sélection, par un dispositif émetteur, d'un mode de communication à utiliser pour échanger des données avec un dispositif récepteur du premier système 10 de communication sans fil, ledit dispositif émetteur pouvant être un terminal, une station de base, un point d'accès, une télécommande ou tout autre type de dispositif de communication sans fil utilisant des modes de communication différents associés à des zones géographiques respectives différentes.

En outre, l'invention a été décrite en se plaçant dans le cas où le premier système 10 de communication sans fil est à bande ultra étroite. Rien n'exclut cependant de considérer d'autres types pour le premier système 10 de communication sans fil. Il est également possible, pour un même terminal 12, d'avoir des modes de communication qui diffèrent par la largeur fréquentielle du spectre fréquentiel instantané des signaux radioélectriques émis. Dans un tel cas, il est possible qu'une partie seulement des modes de communication supportés par le terminal 12 soient à bande ultra étroite.

## Revendications

1. Procédé (50) de sélection, par un dispositif émetteur (12) d'un premier système (10) de communication sans fil, d'un mode de communication à utiliser pour échanger des données avec un dispositif récepteur (11) dudit premier système de communication sans fil, ledit mode de communication étant sélectionné parmi au moins deux modes de communication différents associés à des zones géographiques respectives différentes, **caractérisé en ce que** ledit procédé (50) comporte :
- une écoute (51), par le dispositif émetteur (12), d'un second système (20) de communication sans fil différent du premier système (10) de communication sans fil et comportant au moins deux modes de communication différents associés à des zones géographiques différentes, les modes de communication du second (20) système de communication sans fil étant différents des modes de communication du premier système (10) de communication sans fil,
- une détermination (52), par le dispositif émetteur (12), du mode de communication utilisé par ledit second système de communication sans fil,
- une sélection (53) du mode de communication à utiliser pour échanger des données avec le dispositif récepteur (11) du premier système de communication sans fil en fonction du mode de communication utilisé par ledit second système (20) de communication sans fil.

2. Procédé (50) selon la revendication 1, dans lequel le second système (20) de communication sans fil est un système de diffusion unidirectionnel.

3. Procédé (50) selon la revendication 1 ou 2, dans lequel le second système (20) de communication sans fil est un système de diffusion de signal horaire de synchronisation d'horloge radio-pilotée.

4. Procédé (50) selon la revendication 1 ou 2, dans lequel le second système (20) de communication sans fil est un système de diffusion de télévision analogique ou numérique.

5. Procédé (50) selon la revendication 1 ou 2, dans lequel le second système (20) de communication sans fil est un système de diffusion audio en modulation de fréquence.

6. Procédé (50) selon la revendication 1 ou 2, dans lequel le second système (20) de communication sans fil est un système de diffusion de balise maritime ou aéronautique.

7. Procédé (50) selon l'une des revendications précédentes, dans lequel les modes de communication du premier système (10) de communication sans fil diffèrent par l'un au moins des paramètres suivants :
- bande de fréquences de signaux émis par le dispositif émetteur,
- bande de fréquences de signaux reçus par le dispositif émetteur,
- puissance de signaux émis par le dispositif émetteur,
- type de codage et/ou de modulation de signaux émis par le dispositif émetteur,
- débit de données de signaux émis par le dispositif émetteur,
- méthode d'accès à un canal sur lequel les données sont échangées entre le dispositif émetteur et le dispositif récepteur.

8. Dispositif émetteur (12) d'un premier système (10) de communication sans fil, comportant un module (121) de communication adapté à échanger des données avec un dispositif récepteur (11) dudit premier système de communication sans fil selon au moins deux modes de communication différents associés à des zones géographiques respectives différentes, **caractérisé en ce que** le dispositif émetteur (12) comporte :
- un module (122) d'écoute configuré pour écouter un second système (20) de communication sans fil différent du premier système (10) de communication sans fil et comportant au moins deux modes de communication différents associés à des zones géographiques différentes, les modes de communication du second système (20) de communication sans fil étant différents des modes de communication du premier système (10) de communication sans fil, ledit module (122) d'écoute étant configuré en outre pour déterminer le mode de communication utilisé par ledit second système (20) de communication sans fil,
- un module (123) de contrôle configuré pour sélectionner un mode de communication du module (121) de communication en fonction du mode de communication utilisé par le second système (20) de communication sans fil.

9. Dispositif émetteur (12) selon la revendication 8, dans lequel le second système (20) de communication sans fil est un système de diffusion unidirectionnel.

10. Dispositif émetteur (12) selon la revendication 8 ou 9, dans lequel le module (122) d'écoute est configuré pour écouter un système de diffusion de signal horaire de synchronisation d'horloge radio-pilotée.

11. Dispositif émetteur (12) selon la revendication 8 ou 9, dans lequel le module (122) d'écoute est configuré pour écouter un système de diffusion de télévision analogique ou numérique.

12. Dispositif émetteur (12) selon la revendication 8 ou 9, dans lequel le module (122) d'écoute est configuré pour écouter un système de diffusion en modulation de fréquence.

13. Dispositif émetteur (12) selon la revendication 8 ou 9, dans lequel le module (122) d'écoute est configuré pour écouter un système de diffusion de balise maritime ou aéronautique.

14. Dispositif émetteur (12) selon l'une des revendications 8 à 13, dans lequel le module (121) de communication est configuré pour émettre des signaux à bande ultra-étroite.

## Patentansprüche

1. Verfahren (50) zur Auswahl, durch eine Sendevorrichtung (12) eines ersten drahtlosen Kommunikationssystems (10), eines für den Datenaustausch mit einer Empfangsvorrichtung (11) des ersten drahtlosen Kommunikationssystems zu verwendenden Kommunikationsmodus, wobei der Kommunikationsmodus aus mindestens zwei unterschiedlichen Kommunikationsmodi ausgewählt wird, die jeweiligen unterschiedlichen geografischen Zonen zugeordnet sind, **dadurch gekennzeichnet, dass** das Verfahren (50) aufweist:
- Abhören (51), durch die Sendevorrichtung (12), eines zweiten drahtlosen Kommunikationssystems (20), das sich von dem ersten drahtlosen Kommunikationssystem (10) unterscheidet und mindestens zwei verschiedene Kommunikationsmodi aufweist, die unterschiedlichen geografischen Zonen zugeordnet sind, wobei sich die Kommunikationsmodi des zweiten drahtlosen Kommunikationssystems (20) von den Kommunikationsmodi des ersten drahtlosen Kommunikationssystems (10) unterscheiden,
- Bestimmen (52), durch die Sendevorrichtung (12), des von dem zweiten drahtlosen Kommunikationssystem verwendeten Kommunikationsmodus,
- Auswählen (53) des für den Datenaustausch mit der Empfangsvorrichtung (11) des ersten drahtlosen Kommunikationssystems in Abhängigkeit von dem vom zweiten drahtlosen Kommunikationssystem (20) verwendeten Kommunikationsmodus zu wählenden Kommunikationsmodus.

2. Verfahren (50) nach Anspruch 1, wobei das zweite drahtlose Kommunikationssystem (20) ein eindirektionales Verbreitungssystem ist.

3. Verfahren (50) nach Anspruch 1 oder 2, wobei das zweite drahtlose Kommunikationssystem (20) ein Verbreitungssystem eines Synchronisationszeitzeichens einer Funkuhr ist.

4. Verfahren (50) nach Anspruch 1 oder 2, wobei das zweite drahtlose Kommunikationssystem (20) ein Verbreitungssystem von analogem oder digitalem Fernsehen ist.

5. Verfahren (50) nach Anspruch 1 oder 2, wobei das zweite drahtlose Kommunikationssystem (20) ein frequenzmoduliertes Audio-Verbreitungssystem ist.

6. Verfahren (50) nach Anspruch 1 oder 2, wobei das zweite drahtlose Kommunikationssystem (20) ein Verbreitungssystem eines maritimen oder aeronautischen Zeichens ist.

7. Verfahren (50) nach einem der vorangehenden Ansprüche, wobei sich die Kommunikationsmodi des ersten drahtlosen Kommunikationssystems (10) durch mindestens einen der folgenden Parameter unterscheiden:
- Frequenzband der von der Sendevorrichtung gesendeten Signale,
- Frequenzband der von der Sendevorrichtung empfangenen Signale,
- Stärke der von der Sendevorrichtung gesendeten Signale,
- Typ der Codierung und/oder der Modulation der von der Sendevorrichtung gesendeten Signale,
- Menge der von der Sendevorrichtung gesendeten Datensignale,
- Methode des Zugriffs auf einen Kanal, über den die Daten zwischen der Sendevorrichtung und der Empfangsvorrichtung ausgetauscht werden.

8. Sendevorrichtung (12) eines ersten drahtlosen Kommunikationssystems (10), aufweisend ein Kommunikationsmodul (121), das für den Datenaustausch mit einer Empfangsvorrichtung (11) des ersten drahtlosen Kommunikationssystems gemäß mindestens zwei unterschiedlichen Kommunikationsmodi geeignet sind, die jeweils unterschiedlichen geografischen Zonen zugeordnet sind, **dadurch gekennzeichnet, dass** die Sendevorrichtung (12) aufweist:
- ein Abhörmodul (122), das ausgelegt ist, um ein zweites drahtloses Kommunikationssystem (20) abzuhören, das sich vom ersten drahtlosen Kommunikationssystem (10) unterscheidet und mindestens zwei unterschiedliche Kommunikationsmodi aufweist, die unterschiedlichen geografischen Zonen zugeordnet sind, wobei sich die Kommunikationsmodi des zweiten drahtlosen Kommunikationssystems (20) von den Kommunikationsmodi des ersten drahtlosen Kommunikationssystems (10) unterscheiden, wobei das Abhörmodul (122) ferner ausgelegt ist, um den von dem zweiten drahtlosen Kommunikationssystem (20) verwendeten Kommunikationsmodus zu bestimmen,
- ein Steuermodul (123), das ausgelegt ist, um einen Kommunikationsmodus des Kommunikationsmoduls (121) in Abhängigkeit von dem vom zweiten drahtlosen Kommunikationssystem (20) verwendeten Kommunikationsmodus auszuwählen.

9. Sendevorrichtung (12) nach Anspruch 8, wobei das zweite drahtlose Kommunikationssystem (20) ein eindirektionales Verbreitungssystem ist.

10. Sendevorrichtung (12) nach Anspruch 8 oder 9, wobei das Abhörmodul (122) zum Abhören eines Verbreitungssystems eines Synchronisationszeitzeichens einer Funkuhr ausgelegt ist.

11. Sendevorrichtung (12) nach Anspruch 8 oder 9, wobei das Abhörmodul (122) zum Abhören eines Verbreitungssystems von analogem oder digitalem Fernsehen ausgelegt ist.

12. Sendevorrichtung (12) nach Anspruch 8 oder 9, wobei das Abhörmodul (122) zum Abhören eines frequenzmodulierten Verbreitungssystems ausgelegt ist.

13. Sendevorrichtung (12) nach Anspruch 8 oder 9, wobei das Abhörmodul (122) zum Abhören eines Verbreitungssystems eines maritimen oder aeronautischen Zeichens ausgelegt ist.

14. Sendevorrichtung (12) nach einem der Ansprüche 8 bis 13, wobei das Kommunikationsmodul (121) ausgelegt ist, um Ultraschmalband-Signale zu senden.

## Claims

1. Method (50) for selection, by an emitter device (12) of a first wireless communication system (10), of a communication mode to be used in order to exchange data with a receiver device (11) of said first wireless communication system, said communication mode being selected from at least two different communication modes associated with different respective geographic zones, **characterised in that** said method (50) comprises:
- listening (51), by the emitter device (12), to a second wireless communication system (20) different than the first wireless communication system (10) and comprising at least two different communication modes associated with different geographic zones, the communication modes of the second wireless communication system (20) being different than the communication modes of the first wireless communication system (10),
- determination (52), by the emitter device (12), of the communication mode used by said second wireless communication system,
- selection (53) of the communication mode to be used in order to exchange data with the receiver device (11) of the first wireless communication system according to the communication mode used by said second wireless communication system (20).

2. Method (50) according to claim 1, wherein the second wireless communication system (20) is a unidirectional broadcast system.

3. Method (50) according to claim 1 or 2, wherein the second wireless communication system (20) is a system for broadcasting a time signal for radio-controlled-clock synchronisation.

4. Method (50) according to claim 1 or 2, wherein the second wireless communication system (20) is a system for broadcasting analogue or digital television.

5. Method (50) according to claim 1 or 2, wherein the second wireless communication system (20) is a system for broadcasting audio via frequency modulation.

6. Method (50) according to claim 1 or 2, wherein the second wireless communication system (20) is a system for broadcasting a marine or aeronautic beacon.

7. Method (50) according to one of the previous claims, wherein the communication modes of the first wireless communication system (10) differ by at least one of the following parameters:
- frequency band of signals emitted by the emitter device,
- frequency band of signals received by the emitter device,
- power of signals emitted by the emitter device,
- type of encoding and/or of modulation of signals emitted by the emitter device,
- bit rate of data of signals emitted by the emitter device,
- method for accessing a channel on which the data is exchanged between the emitter device and the receiver device.

8. Emitter device (12) of a first wireless communication system (10), comprising a communication module (121) adapted to exchanging data with a receiver device (11) of said first wireless communication system according to at least two different communication modes associated with different respective geographic zones, **characterised in that** the emitter device (12) comprises:
- a listening module (122) configured to listen to a second wireless communication system (20) different than the first wireless communication system (10) and comprising at least two different communication modes associated with different geographic zones, the communication modes of the second wireless communication system (20) being different than the communication modes of the first wireless communication system (10), said listening module (122) being further configured to determine the communication mode used by said second wireless communication system (20),
- a control module (123) configured to select a communication mode of the communication module (121) according to the communication mode used by the second wireless communication system (20).

9. Emitter device (12) according to claim 8, wherein the second wireless communication system (20) is a unidirectional broadcast system.

10. Emitter device (12) according to claim 8 or 9, wherein the listening module (122) is configured to listen to a system for broadcasting a time signal for radio-controlled-clock synchronisation.

11. Emitter device (12) according to claim 8 or 9, wherein the listening module (122) is configured to listen to a system for broadcasting analogue or digital television.

12. Emitter device (12) according to claim 8 or 9, wherein the listening module (122) is configured to listen to a system for broadcasting via frequency modulation.

13. Emitter device (12) according to claim 8 or 9, wherein the listening module (122) is configured to listen to a system for broadcasting a marine or aeronautic beacon.

14. Emitter device (12) according to one of claims 8 to 13, wherein the communication module (121) is configured to emit ultra-narrow-band signals.
